# EUROPÄISCHE PATENTSCHRIFT

(11) **EP 1 247 636 B1**
(45) Veröffentlichungstag und Bekanntmachung des Hinweises auf die Patenterteilung: **14.09.2005**
(21) Anmeldenummer: 01126665.7
(22) Anmeldetag: 08.11.2001
(51) Int. Cl.: B29C 59/02, B29C 33/38

(54) **Verfahren zur Abformung von hydrophoben Polymeren zur Erzeugung von Oberflächen mit beständig wasser- und ölabweisenden Eigenschaften**
Process for shaping hydrophobic polymers for the production of surfaces with durable water and oil repellent properties
Procédé pour former des polymères hydrophobes pour la production de surfaces avec des propriétés hydrophobes et oléophobes durables

(30) Priorität: 13.12.2000 DE 10062203
(43) Veröffentlichungstag der Anmeldung: 09.10.2002
(73) Patentinhaber: Fraunhofer-Gesellschaft zur Förderung der angewandten Forschung e.V., 80686 München (DE)
(72) Erfinder: Nun, Edwin, Dr., 48727 Billerbeck (DE); Oles, Markus, Dr., 45525 Hattingen (DE); Schleich, Bernhard, Dr., 45657 Recklinghausen (DE); Gombert, Andreas, Dr., 79100 Freiburg (DE); Rose, Klaus, Dr., 97318 Kitzingen (DE); Schottner, Gerhard, Dr., 91560 Heilsbronn (DE)

(56) Entgegenhaltungen:
- EP-A- 0 933 388
- DE-A- 19 917 366
- US-A- 3 354 022

## Beschreibung

Vielfach sind für technische Prozesse und Gegenstände des Alltags hydrophobe und oleophobe Oberflächen erforderlich. Der Grund hierfür kann eine wasserabweisende Wirkung, z.B. bei Kunststoffabdeckungen und Sichtfenstern, sein. Es kann aber auch erforderlich sein, die Haftung von beispielsweise Schmutzpartikeln, Lebensmitteln, Mikroorganismen, Farben, Tinten, Harzen oder Kunststoffen auf entsprechenden Oberflächen wirkungsvoll zu verhindern.

Der Einsatz von per se hydrophoben und oleophoben Materialien, wie perfluorierte Polymeren, zur Herstellung von hydrophobierten und oleophobierten Oberflächen, ist bekannt. Eine Weiterentwicklung dieser Oberflächen besteht darin, die Oberflächen im µm-Bereich bis nm-Bereich zu strukturieren. Hierdurch lassen sich Fortschreitwinkel mit Wasser von über 150 ° realisieren. Es wird eine deutlich stärkere Tröpfchenbildung beobachtet, und im Unterschied zu glatten Oberflächen, können Tröpfchen schon auf wenig geneigten Oberflächen leicht abrollen. Diese Oberflächenstruktur muss mechanisch belastbar sein und darf die hydrophoben und oleophoben Eigenschaften über die Zeit nicht verlieren.

Es sind zahllose Ansätze in der Literatur bekannt, wie man solche Oberflächen unter zur Hilfenahme von Silanen und Fluorverbindungen und/oder physikalischer Methoden herstellen kann.

US 5 599 489 offenbart ein Verfahren, bei dem eine Oberfläche durch Beschuss mit Partikeln z.B. aus Polyfluorethylen einer entsprechenden Größe und anschließender Perfluorierung besonders wasserabweisend ausgestattet werden kann.

Ein anderes Verfahren beschreiben H. Saito et al. in Surface Coating International 4, 1997, S. 168 ff. Hier werden Partikel aus Fluorpolymeren auf Metalloberflächen aufgebracht, wobei eine stark erniedrigte Benetzbarkeit der so erzeugten Oberflächen gegenüber Wasser und eine erheblich reduzierte Vereisungsneigung festgestellt wurde.

In US 3 354 022 und WO 99/04123 sind weitere Verfahren zur Erniedrigung der Benetzbarkeit von Gegenständen durch topologische Veränderungen der Oberfläche beschrieben. Hier werden künstliche Erhebungen bzw. Vertiefungen mit einer Höhe von ca. 5 - 1000 µm und einem Abstand von ca. 5 - 500 µm auf hydrophobe oder nach der Strukturierung hydrophobierter Werkstoffe aufgebracht. Oberflächen dieser Art führen zu einer schnellen Tropfenbildung, wobei die abrollenden Tropfen Schmutzteilchen aufnehmen und somit die Oberfläche reinigen.

Eine einfache Vorgehensweise, um Grenzflächeneigenschaften einer Niedrigenergie-Oberfläche mit den Materialeigenschaften eines üblichen Halbzeugs zu verbinden, ist das Auflaminieren von Fluorpolymeren auf Halbzeugen aus Polymethylmethacrylat (PMMA) oder Polycarbonat (JP 09 316 830). Die Deckfolie verleiht die gewünschten Grenzflächeneigenschaften, führt aber zur Verschlechterung der Transmission. Ein beträchtlicher Nachteil der Methode ist es, dass nur ebene Gegenstände dem Verfahren zugänglich sind und dass mit solchen Folien nur sehr grobe Texturen auf der Oberfläche wiedergeben können.

Dünnere Polymerfilme lassen sich herstellen, wenn die Organo-fluorhaltigen Polymerfilme durch Beschichtung der Substrate aus entsprechenden Lösungen aufgebracht werden. Dabei werden häufig Silane als Haftvermittler zwischen Substrat und Beschichtung eingesetzt. Beispielsweise kann man polymere Substrate zunächst mit 3-Aminopropyltriethoxysilan vorbehandeln und anschließend eine Lösung z. B. aus Fluorpolymere wie Vinylidenfluoridcopolymer (JP 08 277 379) oder Poly(perfluorbutylenvinylether) (JP 04 326 965) auftragen. Je nach Vorgehensweise und weiteren Bestandteilen der Lösung erhält man so eine äußerst harte, kratzbeständige, fest anhaftende und schmutzabweisende Beschichtung. Diese Vorgehensweise ist allerdings kompliziert, da mehrere Komponenten nacheinander in mehreren Verfahrensschritten aufeinander aufgebracht werden müssen. Das Eintrocknen von Polymerfilmen führt bei texturierten Oberflächen wegen Grenzflächeneffekten zu Benetzungsproblemen, so dass Erhebungen nicht beschichtet und Täler egalisiert werden können.

In anderen Verfahren werden ebenfalls lackartige Beschichtungssysteme angewandt und nachträglich mit Fluoralkyltrialkoxisilanen modifiziert, um die Oberflächenenergie herabzusetzen. Um entsprechende fluororganische Silane fest anzubinden, ist es eine übliche Vorgehensweise, zunächst die Substratoberfläche mit Metalloxiden zu belegen (JP 01 110 588 und JP 07 238 229). Dies können Aluminiumoxid, Zirkonoxid oder Siliziumdioxid sein. Eine solche Belegung kann auch durch Zumischen von Tetramethoxysilan zu einem Acryl-Urethanlack erreicht werden, der durch UV-Behandlung ausgehärtet wird (EP 7890). Nachbehandlung, beispielsweise mit Perfluoroctylethylentrimethoxysilanen, führt durch Kondensation zur Ausbildung von kovalenten Bindungen zwischen Metalloxid und Alkoxysilaneinheit. Auf diese Weise lassen sich kratzbeständige, schmutzabweisende Oberflächen generieren, welche gegenüber Wasser einen Kontaktwinkel von ca. 100 - 110 ° aufweisen. Feine Silikatpartikel können zuvor auch mit Perfluoroctylentrichlorsilanen funktionalisiert und anschließend in einem UV-härtbaren Lack suspendiert werden (JP 09 220 518). Die Aushärtung dieser Matrix führt zu Beschichtungen, welche PMMA verstärkt wasserabweisende Eigenschaften verleiht. Einfacher ist der direkte Einsatz von Gemischen aus Perfluorhexylethylentrimethoxysilan, seinen Hydrolyseprodukten und Acrylmonomeren in einem Lack. Beschichtung und UV-Härtung führt zu Polymerfilmen, die gut am Substrat anhaften und über Antifoulingeigenschaften verfügen (JP 10 104 403).

Generell ist bei der Verwendung von Lacken der Einfluss auf die Lichttransmission durch Reflektionen an mehreren Grenzflächen unterschiedlicher optischer Dichte nachteilig. Werden zusätzlich Metalloxidpartikel eingesetzt, treten leicht zusätzliche Streueffekte an den Partikeln auf. Die Schichtdicke des Lackes verhindert zudem das Beschichten von feinen texturierten Oberflächen. Auch ist die mangelnde Elastizität und Schlagfähigkeit solcher Schichten häufig nicht ausreichend.

Alle diese Vorgehensweisen sind umständlich und bedingen zusätzliche Arbeitsschritte. Eleganter ist die Verwendung fluorhaltiger Polymere oder Copolymere, da diese "von Natur aus" eine gewisse Hydrophobie und Oleophobie besitzen. Die Hydrophobie und Oleophobie einer Oberfläche kann durch Anreicherung von fluorhaltigen Polymersequenzen an den Grenzflächen, im Extremfall nur der oberen Atomlagen der Grenzflächen verändert werden. Es reichen sehr dünne Schichten fluororganischer Polymersequenzen für einen ausreichenden hydrophoben Effekt aus.
Der Einsatz von Niederdruckplasma für die Erzeugung dünner Beschichtungen ist literaturbekannt ("Thin Solid Films" (1997), 303 (1,2), 222-225). Ein mögliches Verfahren ist die Plasmapolymerisation von Perfluorcykloalkan, welche zu dünnen Belegungen von Substraten mit Perfluoralkanan führt (EP 0 590 007). Solche Beschichtungen lassen sich auch mit der Plasmapolymerisation von Vinylmethylsilanen oder Vinyltrimethoxisilanen erreichen. Hierbei bilden sich ein Polymer mit seitenständigen Silanen oder Siloxanästen, die zur Beschichtung verschiedener Substrate eingesetzt werden können. Diese Beschichtungen weisen Unebenheiten von 100 - 200 nm auf und zeigen Randwinkel gegen Wasser von fast 140 ° (DE 195 431 33). Der hohe apparative und zeitliche Aufwand für die Niederdruckplasmapolymerisation hat ihre Anwendung gegenüber nasschemischen Verfahren aber bislang limitiert. Plasmen und andere physikalische Verfahren werden seit langem auch verwendet, um Polyolefine für die Lackierung vorzubereiten, d. h. zu aktivieren und so Bindungsstellen für die Anbindung der Beschichtung an das Substrat zu generieren. Auch andere physikalische Verfahren finden für diesen Zweck Anwendung und haben sich für Kunststoffe bewährt. JP 04 326 965 beschreibt beispielsweise das Belichten einer PC-Platte mit UV-Licht vor dem Behandeln mit 3-Aminopropyltrimethoxisilan.

In anderen Verfahren werden strukturierte oleophobe und hydrophobe Oberflächen durch Beimischen fluorhaltiger Polymerpartikel zu Polymerschmelzen erzeugt. Diese Polymerblends werden zum Beschichten von Substraten verwandt. Damit die Oberflächenrauhigkeit nicht verloren geht, müssen Binder und ggf. Kupplungskomponenten zugesetzt werden (EP 0 825 241 oder DE 197 159 06).

Um die gewünschte Kombination von Oberflächenstruktur und Oberflächenchemie, d. h. Hydrophobie in einfacher Weise zu erhalten, sind Prägeverfahren von fluorhaltigen Polymeren z. B. gemäß US 3 354 022 und WO 96/04123 durchgefürt worden.

Im Zuge der Untersuchungen der Anmelderin bezüglich strukturierter, fluorhaltiger Oberflächen wurde festgestellt, dass die Oberfläche von geprägten fluorhaltigen Polymeren eine niedrigere Hydrophobie aufweist, als geprägte und nachträglich hydrophobierte Polymere.

Die DE 199 17 366 A1 beschreibt ein Verfahren zum Prägen von Flourenthaltenden Beschichtungen mit einem Prägestempel aus Silikonkautschuk, der eine unpolare Oberfläche aufweist.

Aufgabe der vorliegenden Erfindung war es, ein Verfahren zur Prägung von hydrophoben Polymeren zu entwickeln, bei dem die geprägte Oberfläche eine höhere Hydrophobie aufweist als die nicht geprägte Oberfläche.

Überraschenderweise wurde gefunden, dass durch Verwendung von metallischen Prägestöcken oder Prägewalzen, die von dem Prägevorgang hydrophobiert werden, Substrate unter weitgehendem Erhalt der hydrophoben Eigenschaften geprägt werden können.

Die Charakterisierung von Oberflächen bezüglich ihrer Benetzbarkeit kann über die Messung der Oberflächenenergie erfolgen. Diese Größe ist z. B. über die Messung der Randwinkel am glatten Material von verschiedenen Flüssigkeiten zugänglich (D.K. Owens, R. C. Wendt, J. Appl. Polym. Sci. 13, 1741 (1969)) und wird in mN/m (Milli-Newton pro Meter) angegeben. Nach Owens et al. bestimmt, weisen glatte Polytetrafluorethylen-Oberflächen eine Oberflächenenergie von 19.1 mN/m auf, wobei der Randwinkel mit Wasser 110 ° beträgt. Allgemein besitzen hydrophobe Materialien mit Wasser Kontakt- oder Randwinkel von über 90 °.

Die Bestimmung des Randwinkels bzw. der Oberflächenenergie erfolgt zweckmäßig an glatten Oberflächen, um eine bessere Vergleichbarkeit zu gewährleisten. Die Materialeigenschaft "Hydrophobie" wird durch die chemische Zusammensetzung der obersten Molekülschicht der Oberfläche bestimmt. Ein höherer Randwinkel bzw. niedrigere Oberflächenenergie eines Materials kann daher auch durch Beschichtungsverfahren erreicht werden.

Erfindungsgemäß hergestellte Oberflächen weisen höhere Randwinkel als die entsprechenden glatten Materialien auf. Der makroskopisch beobachtete Randwinkel ist somit eine Oberflächeneigenschaft, welche die Materialeigenschaften plus die Oberflächenstruktur wiederspiegelt.

Gegenstand der vorliegenden Erfindung ist daher ein Verfahren zur Prägung von hydrophoben Polymeren mit metallischen Prägestöcken, wobei die Prägestöcke vor dem ersten Prägevorgang hydrophobiert werden.

Es sei ausdrücklich darauf hingeweisen, dass bei dem vorliegenden Verfahren keine Übertragung der hydrophoben Schicht vom Prägestock auf das Substrat stattfindet, so dass - zumindest theoretisch - eine einmalige Hydrophobierung des Prägestocks ausreicht. Da eine rein mechanische Abnutzung der hydrophoben Schicht auf dem Prägestock nicht zu vermeiden ist, sollte die Hydrophobierung in regelmäßigen Abständen z. B. nach jeder 30. Prägecampagne wiederholt werden.

Die Prägung der hydrophoben Polymere dient der Aufbringung von Strukturen auf die Polymeroberfläche mit einer Höhe von 50 nm bis 1000 µm, bevorzugt 50 nm bis 10 µm und einem Abstand von 50 nm bis 500 µm, bevorzugt 50 nm bis 10 µm.

Die Prägung kann auch an hydrophoben Polymeren durchgeführt werden, die als Schicht auf einem weiteren Polymer (Matrix) aufgebracht werden. Besonders bewährt für solche Schichten haben sich photochemisch oder thermisch härtbare Lacke wie z. B. Arylatsiloxane (auch modifiziert mit bis zu 10 mol-% Fluoralkylsilan) oder Acrylate, die auch ORMOCERe® oder andere Zuschlagstoffe enthalten können.

So kann das folgende Acrylatsiloxan eingesetzt werden, das mit 2-3 Mol-% Fluoralkylsilan modifiziert ist.

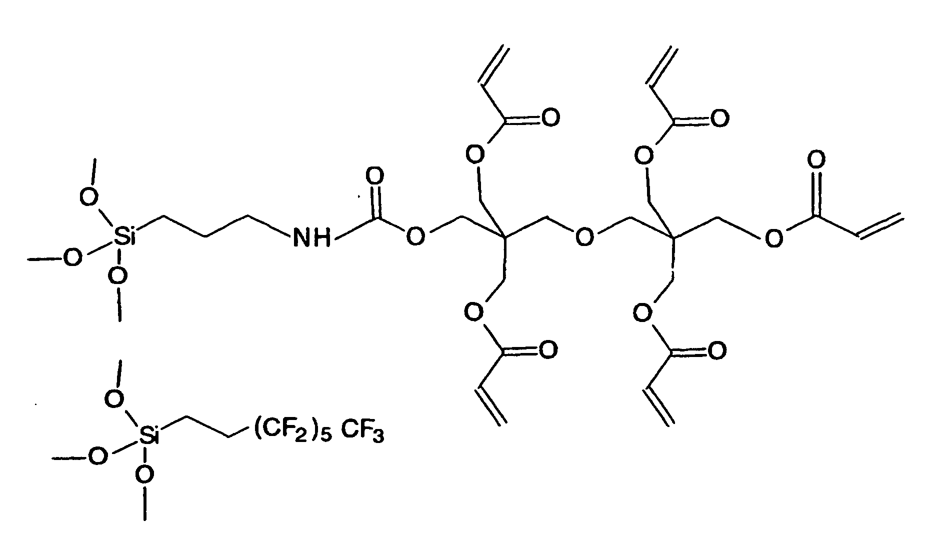

Diese Lacke werden bevorzugt in Schichtdicken von 5 bis 250 µm auf eine polymere Matrix wie z. B. Polymethylmethacrylat, PVC, Polycarbonat, Polyester oder anderer transparente Polymeren aufgetragen und mit einem metallischen Prägestock geprägt.

Die Aushärtung des Lacks erfolgt z. B. durch UV-Bestrahlung durch die Matrix oder thermisch durch Erwärmen. Als Photoinitiator kann z. B. Lucrin oder Irgacure 500 jeweils in 3 Gew.-% eingesetzt werden.

Weiterhin können Vemetzer, z. B. Pentaerythritoltriacrylat, -tetracrylat oder Trimethylolpropantriacrylat zugesetzt werden. Um abrasionsstabilere Prägematerialien zu erhalten, empfiehlt sich zusätzlich der Einsatz von SiO₂-Partikeln (10-50 nm) oder SiO₂-Solen. Nach Aushärtung des Lacks wird der Prägestock abgezogen, es resultiert eine strukturierte Oberfläche (positiv zum Prägestock).

Die metallischen Prägestöcke sog. "Shims" enthalten bevorzugt Nickel oder bestehen an der Prägeseite sogar vollständig aus Nickel. Als Prägestock werden auch strukturierte Walzen verstanden. Deren Metallurgie ist nahezu beliebig, bevorzugtes Material ist aber auch hier Nickel.

Die Hydrophobierung der Prägestöcke oder Prägewalzen kann mit Fluor-Organosilanen wie z. B. Dynasilan F (Degussa-Hüls AG) erfolgen.

### Beispiel

Fluoralkylsilan modifiziertes Acrylatsiloxan wurde unstrukturiert und mit einem Nickelprägestock in einer Periode von 1 µm strukturiert jeweils mit UV-Licht ausgehärtet.

Es resultierten Randwinkel gegen Wasser von ca. 90 ° (unstrukturiert) und 120-130 ° (strukturiert).

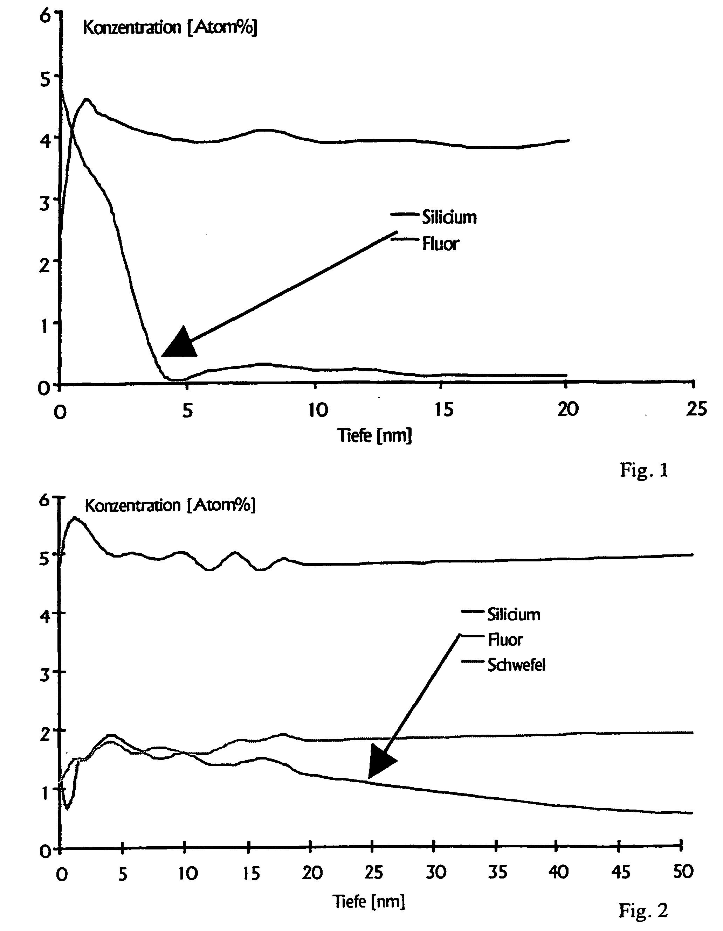

Durch ESCA-Untersuchungen an den ungeprägten (Fig. 1) und geprägten Schichten (Fig. 2) wurde gezeigt, dass nach dem Prägevorgang ein deutlich geringerer Anteil der Fluorgruppen in der Schichtoberfläche zu finden ist, was den geringen Randwinkel des geprägten (strukturierten) Materials erklärt.

Der Nickelprägestock wurde in eine 1 % alkoholische Lösung eines Fluoralkylsilans (3,3,4,4,5,5,6,6,7,7,8,8,8-Tridecafluoroctyltriethoxysilan) getaucht, anschließend 30 Minuten bei 80 °C getrocknet. Eine erneute Prägung mit fluoralkylsilanmodifiziertem Acrylsiloxan lieferte Oberflächen mit einem Randwinkel von ca. 150 ° gegen Wasser.

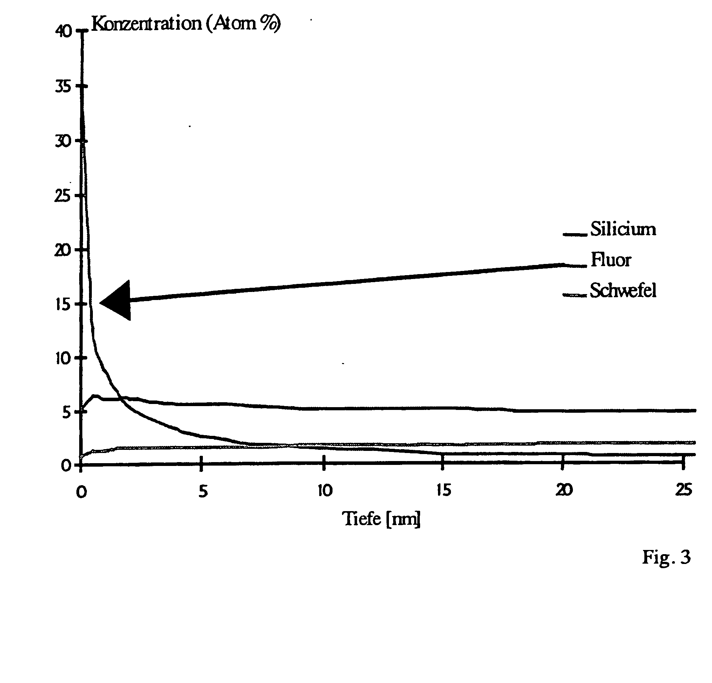

Erst durch Behandlung mit einer alkoholischen Fluoralkylsilan-Hydrolysatlösung wurde mit Wasser ein Randwinkel von ca. 150° gefunden, wobei auch die Wassertropfen spontan von der Oberfläche abperlten. Fig. 3 zeigt, dass die Konzentration an Fluor-Atomen durch das erfindungsgemäße Prägeverfahren nicht beeinträchtigt wird, so dass die Hydrophobie der geprägten Struktur gegenüber dem nicht erfindungsgemäßen Prägevorgang erhöht ist.

## Patentansprüche

1. Verfahren zur Prägung von hydrophoben Polymeren ausgewählt aus der Gruppe der Acrylatsiloxane und der Acrylate mit metallischen Prägestöcken oder Prägewalzen, wobei die Prägestöcke oder Prägewalzen vor dem ersten Prägevorgang hydrophobiert werden.

2. Verfahren nach Anspruch 1, **dadurch gekennzeichnet, dass** fluorhaltige Polymere, Lacke oder Harze geprägt werden.

3. Verfahren nach Anspruch 1, **dadurch gekennzeichnet, dass** die Polymere Lacke, Harze oder fluorhaltige Copolymere enthalten.

4. Verfahren nach einem der Ansprüche 1 oder 2, **dadurch gekennzeichnet, dass** die Polymere Lacke, Harze oder fluorhaltige Polymerblends enthalten.

5. Verfahren nach einem der Ansprüche 1 bis 4, **dadurch gekennzeichnet, dass** die Prägestöcke oder Prägewalzen Nickel enthalten.

6. Verfahren nach einem der Ansprüche 1 bis 5, **dadurch gekennzeichnet, dass** die Prägestöcke oder Prägewalzen mit Fluor-Organosilanen hydrophobiert werden.

7. Verfahren nach einem der Ansprüche 1 bis 6, **dadurch gekennzeichnet, dass** die hydrophoben Acrylatsiloxane oder Acrylate Zuschlagstoffe enthalten.

## Claims

1. Method for embossing hydrophobic polymers selected from the group comprising acrylate siloxanes and acrylates using metallic embossing dies or embossing rolls, the embossing dies or embossing rolls being hydrophobicized before the first embossing procedure.

2. Method according to claim 1, **characterised in that** fluorine-containing polymers, surface coatings or resins are embossed.

3. Method according to claim 1, **characterised in that** the polymers contain surface coatings, resins or fluorine-containing copolymers.

4. Method according to one of claims 1 or 2, **characterised in that** the polymers contain surface coatings, resins or fluorine-containing polymer blends.

5. Method according to one of claims 1 to 4, **characterised in that** the embossing dies or embossing rolls contain nickel.

6. Method according to one of claims 1 to 5, **characterised in that** the embossing dies or embossing rolls are hydrophobicized with fluoroorganosilanes.

7. Method according to one of claims 1 to 6, **characterised in that** the hydrophobic acrylate siloxanes or acrylates contain additives.

## Revendications

1. Procédé de marquage de polymères hydrophobes choisis dans le groupe des acrylates-siloxanes et des acrylates, avec des blocs de marquage ou des cylindres de marquage, selon lequel les blocs de marquage ou les cylindres de marquage sont rendus hydrophobes avant le premier processus de marquage.

2. Procédé selon la revendication 1,
**caractérisé en ce qu'**
on marque des polymères fluorés, des laques ou des résines.

3. Procédé selon la revendication 1,
**caractérisé en ce que**
les polymères contiennent des laques, des résines ou des copolymères fluorés.

4. Procédé selon l'une des revendications 1 ou 2,
**caractérisé en ce que**
les polymères contiennent des laques, des résines ou des mélanges de polymères fluorés.

5. Procédé selon l'une des revendications 1 à 4,
**caractérisé en ce que**
les blocs d'impression ou les cylindres d'impression contiennent du nickel.

6. Procédé selon l'une des revendications 1 à 5,
**caractérisé en ce que**
les blocs d'impression ou les cylindres d'impression sont rendus hydrophobes avec des fluoro-organosilanes.

7. Procédé selon l'une des revendications 1 à 6,
**caractérisé en ce que**
les acrylates-siloxanes ou acrylates hydrophobes contiennent des additifs.
